(19) Europäisches Patentamt
European Patent Office
Office européen des brevets

(11) **EP 2 448 077 B1**

(12) **EUROPEAN PATENT SPECIFICATION**

(45) Date of publication and mention
of the grant of the patent:
**22.06.2016 Bulletin 2016/25**

(51) Int Cl.:
*H02H 9/00* *(2006.01)*          *H05B 41/285* *(2006.01)*
*H02H 9/04* *(2006.01)*

(21) Application number: **10189055.6**

(22) Date of filing: **27.10.2010**

(54) **A limiter circuit for limiting voltages**

Begrenzerschaltung zur Spannungsbegrenzung

Circuit limiteur des tensions

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.05.2012 Bulletin 2012/18**

(73) Proprietor: **Helvar Oy Ab**
**02150 Espoo (FI)**

(72) Inventors:
• **Vihinen, Hannu**
**02150 Espoo (FI)**
• **Perkiö, Tuomas**
**02150 Espoo (FI)**

(74) Representative: **Berggren Oy Ab**
**P.O. Box 16**
**Eteläinen Rautatiekatu 10A**
**00101 Helsinki (FI)**

(56) References cited:
**JP-A- 10 191 557          US-A- 5 313 358
US-A1- 2007 081 289**

**Description**

**The field of the invention**

Many kinds of electrical devices, such as different kinds of lighting devices, need a connection circuitry between a power source and the electrical device.

**The state of the art**

A connection circuitry, i.e. a connection device, connects a power source and a load so that electrical energy from the power source is provided in a form suitable to the load using said electrical energy. The load is an electrical device, for example a lighting unit. An important function of the connection circuitry is to prevent different kinds of electrical interferences and disturbances from causing device and/or operational failures.

There are two main modes of transmission of an electrical surge via cables: a common mode surge and a differential mode surge. A common mode surge produces a voltage between the ground potential and the conductors. The potential difference is the same between each conductor and the ground. A differential mode surge produces a voltage between the two conductors. The potential difference induced by the surge is carried between the two conductors.

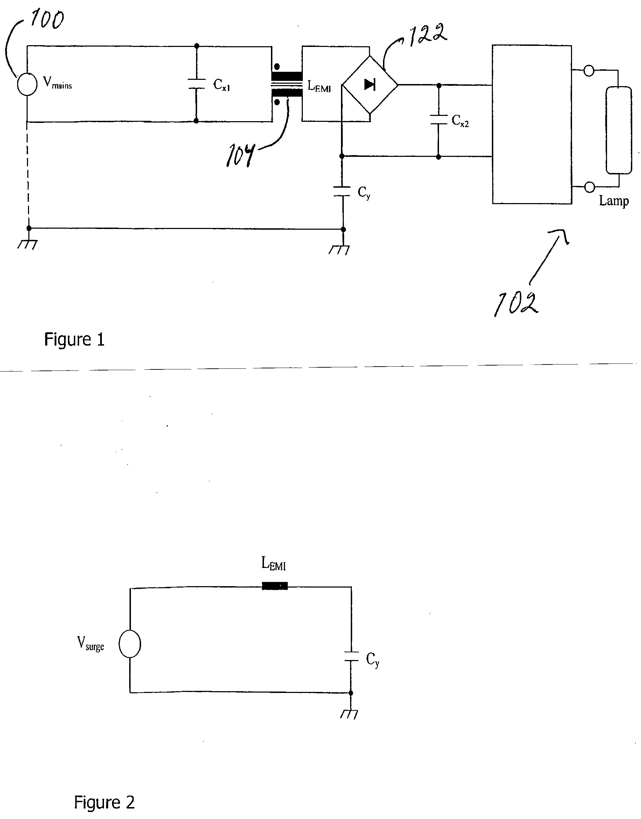

In figure 1 is presented a prior art connection circuitry between a power source 100, i.e. a voltage source, and a load 102, i.e. an electrical device that uses electrical energy provided by the voltage source. Such a circuitry is known, for example, from "Lighting Control - Technology and Applications" by Robert S. Simpson (Focal Press, 2003), page 220. The connector circuitry comprises a common mode choke $L_{EMI}$, X-capacitors $C_{x1}$ and $C_{x2}$, and a Y-capacitor $C_y$. To some extent, differential mode voltage interferences are filtered by said common mode choke $L_{EMI}$ and X-capacitors $C_{x1}$ and $C_{x2}$, and common mode interferences by common mode choke $L_{EMI}$, and the Y-capacitor $C_y$.

In the prior art arrangement of figure 1, the power source 100 is a mains voltage from an electrical network. A rectifier bridge 122 rectifies alternating voltage provided by the electrical network. Typically, there are requirements concerning surge voltages the connection circuitry must tolerate. For example, in the case of electronic ballasts, standard IEC61000-4-5 requires that the connection circuitry must tolerate a 2 kV common mode surge voltage without damages. This is tested by producing a common mode test surge to the connection circuitry using a surge voltage source. The surge voltage source is denoted by Vsurge in the following description and in figures 2-5.

In figure 2, a simplified schematic of the block diagram of figure 1 during a common mode voltage surge is presented. A surge voltage source Vsurge replaces the mains voltage source. The X-capacitors $C_{x1}$ and $C_{x2}$ can be considered as short circuits, because their capacitances are about 100-fold compared to the capacitance of the Y-capacitor $C_Y$. The diodes in the rectifier bridge also form a short circuit during a voltage surge. Therefore, the common mode choke and the Y-capacitor form a series resonance circuit as shown in figure 2. Due to the common mode surge voltage, the voltage of the Y-capacitor may be up to twice the peak value of the surge voltage. A voltage oscillation arises in the resonance frequency of the common mode choke $L_{EMI}$ and the Y-capacitor. In this situation, the common mode choke may saturate, and, therefore, the resonance current or voltage is not sinusoidal. The high, oscillating voltage over the Y-capacitor may cause breakthroughs, damages to sensitive parts of the device, or operational failures.

Further in related art, US 2007/081289 A1 discloses a pair of back-to-back avalanche devices, e.g. two pairs of zener diodes connected to one another by their anodes, each avalanche device connected between an input node and an output node of the common mode choke and hence in parallel with the common mode choke. JP 10191557 A discloses a circuit comprising a varistor connected in parallel to a series circuit formed by one side of a common mode coil and a choke coil in a power supply line filter device provided in a power supply circuit.

**Short description of the invention**

The object of the invention is to achieve, with reasonable costs, safe operating conditions for an electrical device by preventing high voltage values from arising in a connection circuitry and thus effectively preventing both damages to the electrical device and operational errors in the operation of the electrical device. This is achieved by an apparatus comprising a connection circuitry and a limiter circuit for limiting substantially high voltage values from arising in the connection circuitry, the connection circuitry making a connection from a power source to a load, said connection circuitry comprising a common mode choke, a first circuit connecting the power source and the common mode choke, a second circuit connecting the common mode choke and the load, and a diode bridge for rectifying alternating voltage from the power source to rectified voltage in the second circuit. The limiter circuit comprises a voltage dependent element for decreasing resistivity of said element according to an increase in voltage in said element, said voltage dependent element comprising at least two terminals, the first terminal being connected to the first circuit and the second terminal being connected to the second circuit bypassing the common mode choke, a serial connection of at least two diodes being connected to said rectified voltage in the second circuit, and the second terminal of the voltage dependent element being connected in between said at least two diodes.

According to an embodiment of the invention the voltage dependent element is a voltage dependent resistor.

In one embodiment of the invention, the power source is a mains voltage source.

According to an embodiment of the invention, the capacitance of the serial connection of the at least two diodes is substantially lower than the capacitance of the voltage dependent element in order to decrease the capacitance of the limiter circuit. In a preferred embodiment, the capacitance of the limiter circuit is at most of the same order of magnitude as the capacitance of the common mode choke.

The invention is based on the utilization of a voltage dependent element in a limiter circuit for a connection circuitry for decreasing resistivity of said element according to an increase of voltage in said element, which limiter circuit bypasses a common mode choke, the first terminal of the voltage dependent element being connected to the power source side in relation to the common mode choke. A serial connection of at least two diodes is connected to the load side in relation to the common mode choke, and the second terminal of the voltage dependent element is connected in between said at least two diodes, which are reverse-biased. The limiter circuit limits substantially high voltage values from arising in the connection circuitry. The benefit of the invention is that it provides a practical and relatively low cost arrangement for preventing high voltage values from arising in a connection circuitry, and thus damages to an electrical device and operational errors due to the high voltage values are avoided.

**Short description of figures**

Figure 1    presents a block diagram of a prior art connection circuitry.

Figure 2    presents a simplified schematic of the block diagram presented in figure 1.

Figure 3    presents a preferred embodiment according to the invention.

Figure 4    presents a simplified schematic of the present invention.

Figure 5    presents examples of alternative capacitor locations in embodiments according to the invention.

**Detailed description of the invention**

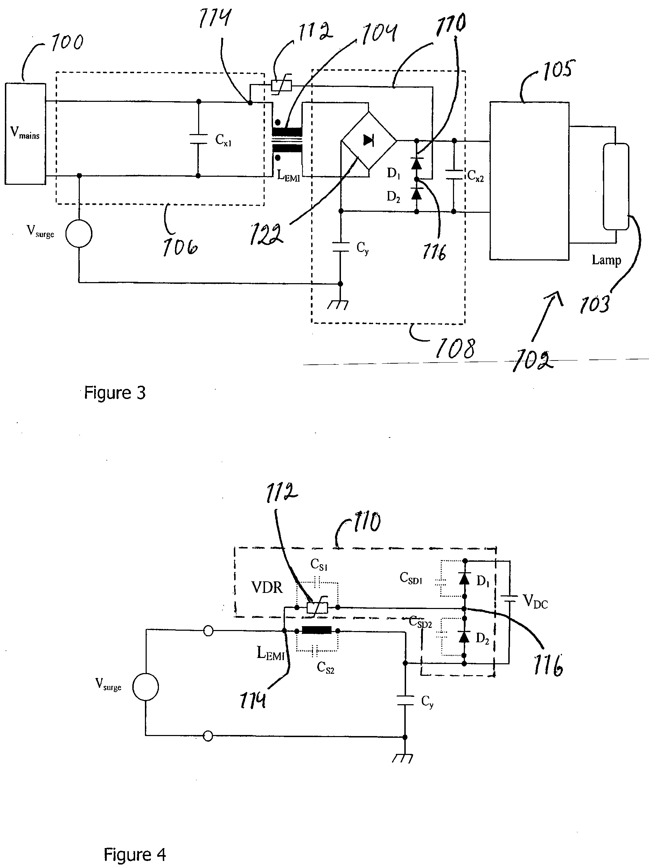

In order to prevent high, oscillating voltages from arising in the connection circuitry, a limiter circuit comprising damping components is connected to the connection circuitry. In figure 3 is presented a preferred embodiment according to the invention, showing a limiter circuit 110 for a connection circuitry making a connection from a power source 100 to a load 102. The connection circuitry comprises a common mode choke 104, a first circuit 106 connecting the power source 100 and the common mode choke 104, and a second circuit 108 connecting the common mode choke 104 and the load 102. In the embodiment of figure 3, the power source 100 is a mains voltage source, and the load 102 is a lamp 103 together with the control circuitry 105 of the lamp. The lamp 103 can be a gas discharge lamp, such as a fluorescent lamp or a high-intensity discharge lamp, or it can be a LED-lamp. The control circuitry 105 may comprise the ballast of the lamp, comprising, for example, means for dimming the lamp, or means for preheating the lamp cathodes. However, the load 102 can be any other electrical device that can be connected to a power source 100 using a connection circuitry. The limiter circuit 110 comprises a voltage dependent element 112 for decreasing resistivity of said element according to an increase of voltage in said element. The voltage dependent element 112 comprises at least two terminals 114, 116, the first terminal 114 being connected to the first circuit 106 and the second terminal 116 being connected to the second circuit 108 bypassing the common mode choke 104. In this preferred embodiment, the voltage dependent element 112 is a voltage dependent resistor (VDR), which is also known as a varistor. Any other kind of voltage dependent element can be used, such as a silicon controlled rectifier (SCR), also known as a thyristor. The connection circuitry also comprises a diode bridge 122 for rectifying alternating mains voltage from the mains voltage source 100 to rectified voltage in the second circuit 108.

In figure 4 is presented a simplified schematic of the present invention.

The voltage dependent resistor 112 is non-conductive until the voltage exceeds the threshold voltage of the voltage dependent resistor. For a typical voltage dependent resistor to be used, the threshold voltage is of the order of 400 V. Once the voltage dependent resistor 112 is conducting, it introduces losses to the circuitry, and thus attenuates the oscillation caused by the surge voltage. The voltage dependent resistor prevents high voltages over the Y-capacitor and attenuates the oscillation of the resonance circuit, thus preventing damages and operational failures. After the surge voltage has been attenuated, the voltage dependent element return to non-conductive state.

However, voltage dependent resistors 112 typically have large internal capacitance ($C_{S1}$ in figure 4) compared to the internal capacitance ($C_{S2}$) of the common mode choke 104. The capacitance of the voltage dependent resistor can be of the order of 100 pF. If the voltage dependent resistor is simply connected in parallel with the common mode choke, during normal operation of the circuitry, interferences intended to be filtered by the common mode choke 104 would be able to bypass the common mode choke via the voltage dependent resistor.

Therefore, according to the present invention, the limiter circuit also comprises a serial connection of at least two diodes D1, D2 connected to the second circuit 108. The second terminal 116 of said voltage dependent resistor 116 is connected in between the at least two diodes D1, D2. As presented in figures 3 and 4, the serial connection of the at least two diodes D1, D2 is connected to the DC voltage, i.e. to the rectified voltage in the second circuit 108. The anode side of the lower serial connected diode D2 is connected to a node between the common mode choke 104 and the Y-capacitor. This way, the serial connected diodes D1, D2 are reverse-biased and are not conductive during normal operation of the circuitry.

The internal capacitance of the diodes D1, D2 ($C_{SD1}$ and $C_{SD2}$ in figure 4) is considerably lower than the internal capacitance of the voltage dependent resistor 112. The capacitances of the diodes are typically in the range of 2-20 pF, depending on the reverse voltage. The capacitance of the serial connection of the at least two diodes needs to be selected to be substantially lower than the capacitance of the voltage dependent resistor in order to decrease the overall capacitance of the limiter circuit 110. The total capacitance of the limiter circuit is calculated according to the following equation

$$C_{tot} = \frac{(C_{SD1} + C_{SD2}) \cdot C_{S1}}{(C_{SD1} + C_{SD2}) + C_{S1}} << C_{S1} \qquad [1]$$

, where $C_{tot}$ is the total capacitance of the limiter circuit 11
$C_{SD1}$ is the internal capacitance of the first diode D1,
$C_{SD2}$ is the internal capacitance of the second diode D2, and
$C_{S1}$ is the internal capacitance of the voltage dependent resistor 112.

If diodes with sufficiently low capacitance values are not available, a low total capacitance of the limiter circuit can be obtained by connecting more than two diodes in series.

When the overall capacitance of the limiter circuit 110 is low, interference attenuation characteristics of the common mode choke 104 are not compromised during normal operation of the circuitry. Advantageously, the capacitance of the limiter circuit 110 is of the same order of magnitude as the capacitance of the common mode choke 104, or even lower. Preferably the capacitance of the limiter circuit 110 is lower than the capacitance of the common mode choke 104, for example, 1% - 30% of the capacitance of the common mode choke.

In normal operating conditions, there is preferably no current passing through the limiter circuit 110 according to the invention. As described, the limiter circuit becomes active when the threshold voltage of the voltage dependent element 112 is exceeded.

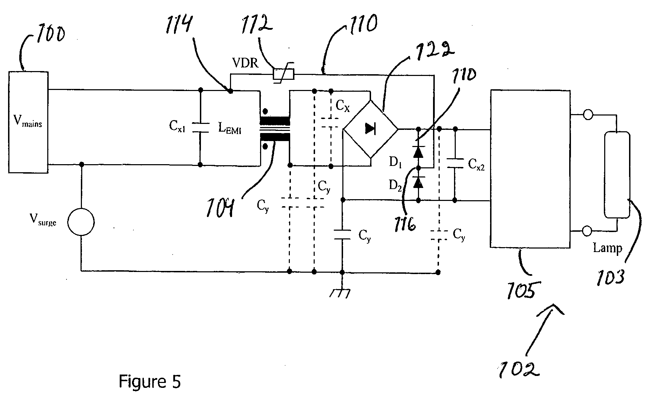

In figure 5 is presented with dashed lines alternative locations for the X-capacitor(s) and the Y-capacitor(s) in embodiments according to the invention. Y-capacitor can be connected to the ground potential also from the positive rectified voltage, i.e. from the other terminal of the $C_{x2}$. There can also be two Y-capacitors, one connected from the negative rectified voltage to the ground potential, and the other one connected from the positive rectified voltage to the ground potential. Figure 5 also shows an alternative location for X-capacitor $C_x$, where it is connected between the common mode choke 104 and the diode bridge 122.

Although the invention has been presented in reference to the attached figures and specification, the invention is by no means limited to those, as the invention is subject to variations within the scope allowed for by the claims.

**Claims**

1. An apparatus comprising a connection circuitry and a limiter circuit (110) connected to the connection circuitry for limiting substantially high voltage values from arising in the connection circuitry, the connection circuitry making a connection from a power source (100) to a load (102), said connection circuitry comprising a common mode choke (104), a first circuit (106) connecting the power source (100) and the common mode choke (104), a second circuit (108) connecting the common mode choke (104) and the load (102), and a diode bridge (122) for rectifying alternating voltage from the power source (100) to rectified voltage in the second circuit (108), wherein the limiter circuit (110) comprises a voltage dependent element (112) for decreasing resistivity of said element (112) according to an increase in voltage in said element (112), said voltage dependent element comprising at least two terminals (114, 116), the first terminal (114) being connected to the first circuit (106) and the second terminal (116) being connected to the second circuit (108) bypassing the common mode choke (104), **characterized in that** the limiter circuit comprises a serial connection of at least two diodes (D1, D2) being connected to said rectified voltage in the second circuit (108), and the second terminal (116) of the voltage dependent element (112) being connected in between said at least two diodes (D1, D2).

2. An apparatus in accordance with claim 1, wherein the voltage dependent element (112) between the first circuit (106) and the second circuit (108) comprises a voltage dependent resistor (112).

3. An apparatus in accordance with claim 1 or 2, wherein the power source (100) is a mains voltage source (100).

4. An apparatus in accordance with any of claims 1 to 3, wherein a cathode of a first diode (D1) of said at least two diodes (D1, D2) is coupled to said rectified voltage in the second circuit (108) and wherein an anode of a second diode (D2) of said at least two diodes (D1, D2) is coupled to a ground potential via a Y- capacitor (Cy).

5. An apparatus in accordance with any of claims 1 to 4, wherein the capacitance of the serial connection of the at least two diodes (D1, D2) is substantially lower than the capacitance of the voltage dependent element (112) in order to decrease the capacitance of the limiter circuit (110).

6. An apparatus in accordance with claim 5, wherein the capacitance of the limiter circuit (110) is at most of the same order of magnitude as the capacitance of the common mode choke (104).

**Patentansprüche**

1. Vorrichtung, die eine Verbindungsschaltung und eine mit der Verbindungsschaltung verbundene Begrenzungsschaltung (110) zum wesentlichen Begrenzen einer Entstehung von hohen Spannungswerten in der Verbindungsschaltung umfasst, wobei die Verbindungsschaltung eine Verbindung von einer Versorgungsquelle (100) zu einer Last (102) bildet, wobei die Verbindungsschaltung eine Gleichtaktdrossel (104), eine erste Schaltung (106), die die Versorgungsquelle (100) und die Gleichtaktdrossel (104) verbindet, eine zweite Schaltung (108), die die Gleichtaktdrossel (104) und die Last (102) verbindet, und eine Diodenbrücke (122) zum Gleichrichten von Wechselspannung von der Versorgungsquelle (100) auf eine gleichgerichtete Spannung in der zweiten Schaltung (108) umfasst, wobei die Begrenzungsschaltung (110) ein spannungsabhängiges Element (112) zum Verringern des spezifischen Widerstands des Elements (112) gemäß einem Spannungsanstieg in dem Element (112) umfasst, wobei das spannungsabhängige Element mindestens zwei Anschlüsse (114, 116) umfasst, wobei der erste Anschluss (114) mit der ersten Schaltung (106) verbunden ist und der zweite Anschluss (116) mit der zweiten Schaltung (108) derart verbunden ist, dass er die Gleichtaktdrossel (104) überbrückt, **dadurch gekennzeichnet, dass** die Begrenzungsschaltung eine Reihenverbindung von mindestens zwei Dioden (D1, D2) umfasst, die mit der gleichgerichteten Spannung in der zweiten Schaltung (108) verbunden sind, und der zweite Anschluss (116) des spannungsabhängigen Elements (112) zwischen den mindestens zwei Dioden (D1, D2) verbunden ist.

2. Vorrichtung nach Anspruch 1, wobei das spannungsabhängige Element (112) zwischen der ersten Schaltung (106) und der zweiten Schaltung (108) einen spannungsabhängigen Widerstand (112) umfasst.

3. Vorrichtung nach Anspruch 1 oder 2, wobei die Versorgungsquelle (100) eine Netzspannungsquelle (100) ist.

4. Vorrichtung nach einem der Ansprüche 1 bis 3, wobei eine Kathode einer ersten Diode (D1) von den mindestens zwei Dioden (D1, D2) mit der gleichgerichteten Spannung in der zweiten Schaltung (108) gekoppelt ist, und wobei eine Anode einer zweiten Diode (D2) von den mindestens zwei Dioden (D1, D2) über einen Y-Kondensator (Cy) mit einem Massepotential gekoppelt ist.

5. Vorrichtung nach einem der Ansprüche 1 bis 4, wobei die Kapazität der Reihenverbindung der mindestens zwei Dioden (D1, D2) wesentlich niedriger ist als die Kapazität des spannungsabhängigen Elements (112), um die Kapazität der Begrenzungsschaltung (110) zu verringern.

6. Vorrichtung nach Anspruch 5, wobei die Kapazität der Begrenzungsschaltung (110) höchstens von derselben Größenordnung ist wie die Kapazität der Gleichtaktdrossel (104).

**Revendications**

1. Appareil comportant une circuiterie de liaison et un circuit limiteur (110) relié à la circuiterie de liaison pour s'opposer à l'apparition de valeurs de tension sensiblement élevées dans la circuiterie de liaison, la circuiterie de liaison établissant une liaison d'une source (100) d'alimentation à une charge (102), ladite circuiterie de liaison comportant un piège (104) à mode commun, un premier circuit (106) reliant la source (100) d'alimentation et le piège (104) à mode commun, un deuxième circuit (108) reliant le piège (104) à mode commun et la charge (102), et un pont (122) de diodes servant à redresser une tension alternative provenant de la source (100) d'alimentation en tension redressée dans le deuxième circuit (108), le circuit limiteur (110) comportant un élément (112) dépendant de la tension pour diminuer la résistivité dudit élément (112) en fonction d'une augmentation de tension dans ledit élément (112), ledit élément dépendant de la tension comportant au moins deux bornes (114, 116), la première borne (114) étant reliée au premier circuit (106) et la deuxième borne (116) étant reliée au deuxième circuit (108) en contournant le piège (104) à mode commun, **caractérisé en ce que** le circuit limiteur comporte une liaison en série d'au moins deux diodes (D1, D2) qui est raccordée à ladite tension redressée dans le deuxième circuit (108), et la deuxième borne (116) de l'élément (112) dépendant de la tension étant raccordée entre lesdites au moins deux diodes (D1, D2).

2. Appareil selon la revendication 1, l'élément (112) dépendant de la tension entre le premier circuit (106) et le deuxième circuit (108) comportant une varistance (112).

3. Appareil selon la revendication 1 ou 2, la source (100) d'alimentation étant une source (100) de tension du secteur.

4. Appareil selon l'une quelconque des revendications 1 à 3, une cathode d'une première diode (D1) parmi lesdites au moins deux diodes (D1, D2) étant couplée à ladite tension redressée dans le deuxième circuit (108) et une anode d'une deuxième diode (D2) parmi lesdites au moins deux diodes (D1, D2) étant couplée à un potentiel de terre, via un condensateur Y (Cy).

5. Appareil selon l'une quelconque des revendications 1 à 4, la capacitance de la liaison en série desdites au moins deux diodes (D1, D2) étant sensiblement inférieure à la capacitance de l'élément (112) dépendant de la tension afin de diminuer la capacitance du circuit limiteur (110).

6. Appareil selon la revendication 5, la capacitance du circuit limiteur (110) étant au plus du même ordre de grandeur que la capacitance du piège (104) à mode commun.

Figure 1

Figure 2

Figure 3

Figure 4

8

Figure 5

**EP 2 448 077 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007081289 A1
- JP 10191557 A

**Non-patent literature cited in the description**

- **ROBERT S. SIMPSON.** Lighting Control - Technology and Applications. Focal Press, 2003, 220